(19) Europäisches Patentamt
European Patent Office
Office européen des brevets

(11) EP 0 760 374 B1

(12) **EUROPÄISCHE PATENTSCHRIFT**

(45) Veröffentlichungstag und Bekanntmachung des Hinweises auf die Patenterteilung:
**09.02.2000 Patentblatt 2000/06**

(51) Int Cl.[7]: **C07F 17/00**

(21) Anmeldenummer: **95113595.3**

(22) Anmeldetag: **30.08.1995**

(54) **Unsymmetrisch substituierte, an einem Cyclopentadienylring funktionalisierte Metallocene und deren Darstellung**

Unsymmetrically substituted metallocenes functionalized at only one cyclopentadiene moiety and their preparation

Métallocènes substitués asymétriquement - seulement un groupement cyclopentadiènylique fonctionnalisé - et procédé de préparation

(84) Benannte Vertragsstaaten:
**BE DE FR GB NL**

(43) Veröffentlichungstag der Anmeldung:
**05.03.1997 Patentblatt 1997/10**

(73) Patentinhaber: **Witco GmbH
59192 Bergkamen (DE)**

(72) Erfinder: **Lisowsky, Richard, Dr.
D-59174 Kamen (DE)**

(56) Entgegenhaltungen:
- **JOURNAL OF ORGANOMETALLIC CHEMISTRY, Bd. 489, 1995 Seiten C81-C83, CHURAKOV, A.V. ET AL. 'SYNTHESIS OF SANDWICH AND HALF-SANDWICH COMPLEXSES OF Ti, Zr AND Hf CONTAINING .ETA.5-C5H4SIME2CL LIGAND. MOLECULAR STRUCTURE OF (TICL2(.MU.-OSIME2-.ETA.5-C5H4))2'**
- **CHEMICAL ABSTRACTS, vol. 122, no. 15, 10.April 1995 Columbus, Ohio, US; abstract no. 187720n, CHURAKOV, A.V. 'SYNTHESIS OF CHLOROSILYLATED SANDWICH AND HALF-SANDWICH COMPLEXES OF EARLY TRANSITION METALS' Seite 1072; & VESTN. MOSK. UNIV., SER. 2: KHIM., Bd. 35, Nr. 5, 1994 Seiten 483-484,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue, unsymmetrisch substituierte, an einem Cyclopentadienylring funktionalisierte Metallocene und Verfahren zu deren Herstellung.

Mit der Erkenntnis, daß Metallocene Ausgangskomponenten darstellen, die in Kombination mit speziellen Aktivatoren, wie z. B. Aluminoxanen, hochaktive Polymerisationskatalysatoren ergeben, gewinnt auch die Synthese solcher Verbindungen immer größere Bedeutung (Angewandte Chemie 1980, 92, 396; Angewandte Chemie 1992, 104, 1373; Angewandte Chemie 1989, 101, 1536).

Obwohl generelle Synthesemethoden für die Darstellung von Metallocenen in der Literatur beschrieben wurden, sind diese nicht in allen Fällen anwendbar. So sind unsymmetrische, das heißt zwei unterschiedlich substituierte Cyclopentadienylringe tragende Metallocene nur schwer über die Methode der Metallierung von Cyclopentadienyl-Derivaten und anschließendem Umsatz mit einem Übergangsmetallhalogenid entsprechend Gleichung I darstellbar:

$$Cp' \xrightarrow{M'} Cp'M \xrightarrow[-\ MCl]{ZrCl_4} Cp'ZrCl_3 \xrightarrow[-\ MCl]{Cp''M} Cp'Cp''ZrCl_2 \qquad (I)$$

M' = Metallisierungsmittel (Li, Na); Cp', Cp'' = Cyclopentadienylreste.

Verbindungen $Cp'Cp''ZrCl_2$ sind mit Einschränkung z. B. nach der schematisch in Gleichung I dargestellten Synthese durch Umsetzung von $ZrCl_4$ mit Cp'M, Isolieren von $Cp'ZrCl_3$ und anschließendem Umsatz mit Cp''M zu erhalten.

Dabei ist bedingt durch geringe Ausbeuten und hohen Reinigungsaufwand insbesondere die Synthese von $Cp'ZrCl_3$ schwierig (J. Am. Chem. Soc., 1979, 101, 7410, CA: **88**: 170265 z ; J. Organometal. Chem., 1977, 127, C35).

Dieser Syntheseweg versagt aber dann, wenn an einem der Cyclopentadienyl-Systeme sich noch eine funktionelle Gruppe befindet, die mit dem Metallierungsmittel M zu reagieren in der Lage ist, z. B. bei Verbindungen

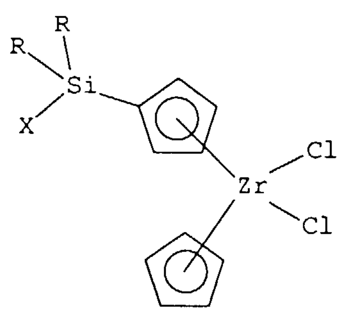

Abbildung I

So sind Verbindungen des Typs $(R_2SiX)Cp'ZrCp''Cl_2$ (Abbildung I) mit X = Cl, Br, I wegen der Reaktivität der X-Si-Bindung gegenüber Metallierungsmitteln bisher nur in Einzelfällen (J. Organometal. Chem., 1995, 489, C81) und für die Cyclopentadienyl-Gruppe (= Indenyl- oder Tetrahydroindenyl-Rest) gar nicht synthetisiert worden.

Aufgabe der vorliegenden Erfindung war es daher, neue unsymmetrisch substituierte, das heißt, nur an einem Cyclopentadienyl-Ring (Cp-Ring) funktionalisierte Metallocene bereitzustellen.

Diese Aufgabe wird gelöst durch ein Verfahren zur Herstellung dieser neuen Cp-Verbindungen, welches dadurch gekennzeichnet ist, daß die Ausgangsverbindungen in einem inerten Lösungsmittel, gegebenenfalls bei erhöhter Temperatur, mit Säuren selektiv an der Si-Cp-Bindung gespalten werden.

Gegenstand der Erfindung ist ein Verfahren zur Herstellung von unsymmetrisch substituierten Verbindungen der allgemeinen Formel (1)

$$[R^1R^2X^1Si((R^3)_aCp)]\,((R^4)_aCp)M(X^2)_n \qquad (1)$$

worin

$R^1$, $R^2$ = unabhängig voneinander Alkyl-, Aryl-Reste
$X^1$ = F, Cl, Br, I, p-Tolyl$SO_3$-, $F_3CSO_3$-, $F_3CCO_2$-, $H_3CCO_2$-,
$R^3$, $R^4$ = gleich oder verschieden Alkyl-, Alkylether- oder Aryl-, Arylethergruppen mit $0 \leq a \leq 4$
Cp = ein Cyclopentadienyl, Indenyl-, Tetrahydroindenyl- oder Fluorenyl-Rest
M = ein Übergangsmetall der Gruppen 3 - 6 (IUPAC Notation), insbesondere Ti, Zr, Hf
$X^2$ = F, Cl, Br, I
n = die Oxidationszahl des Übergangsmetalls, vermindert um 2,

sind,
welches dadurch gekennzeichnet ist, daß Verbindungen der allgemeinen Formel (2),

$$R^1R^2Si(Cp(R^3)_a)\ (Cp(R^4)_a)M(X^2)_n \qquad (2)$$

wobei $R^1$, $R^2$, Cp, $R^3$, $R^4$, a, M, $X^2$ und n die oben angeführten Bedeutungen haben, in einem inerten Lösungsmittel mit anorganischen oder organischen Säuren $HX^1$ bei gegebenenfalls erhöhter Temperatur, bei gegebenenfalls erhöhtem Druck, gemäß allgemeiner Gleichung II

$$R^1R^2Si(Cp(R^3)_a)(Cp(R^4)_a)MX^2{}_n + HX^1 \rightarrow [R^1R^2X^1Si((R^3)_aCp)]\ ((R^4)_aCp)MX^2{}_n \qquad (II)$$

umgesetzt werden.

Die erfindungsgemäß mitverwendbaren Verbindungen der allgemeinen Formel (2) sind nach an sich bekannten Verfahren - wie beispielsweise in der US-A-5 103 030, EP-A-0 530 908, EP-A-0 669 340 beschrieben - herstellbar. Erfindungsgemäß bevorzugt sind die gemäß EP-A-0 669 340 Anspruch 1 herstellbaren Verbindungen mit Z = Si.

Als erfindungsgemäßes Lösungsmittel geeignet sind dabei alle aprotischen, organischen Lösungsmittel, in denen die Verbindungen zumindest teilweise löslich sind. Die Lösungsmittelmenge ist unkritisch und kann der jeweiligen Löslichkeit des Einsatzproduktes angepaßt werden, wobei nicht das gesamte Produkt gelöst sein muß, sondern zum Teil auch als Dispersion vorliegen kann. Aus verfahrenstechnischen Gründen soll die Lösungsmittelmenge so bemessen werden, daß eine rührfähige Mischung vorliegt und sich genügend Einsatzprodukt für die Umsetzung bei der Säure $HX^1$ in Lösung befindet.

Besonders geeignet sind aromatische Lösungsmittel wie Toluol, Xylol, halogenierte Kohlenwasserstoffe wie Methylenchlorid oder Chloroform sowie Ether wie Diethylether oder Tetrahydrofuran.

Dabei wird das entsprechende Metallocen der Formel (2) bei Raumtemperatur in einem Lösungsmittel oder Lösungsmittelgemisch vorgelegt und mit der Säure $HX^1$ versetzt und bis zum vollständigen Umsatz gerührt.

Als mitverwendbare Säuren $HX^1$ kommen anorganische und organische Säuren in Betracht. Bevorzugt sind einbasische Säuren wie p-Toluolsulfonsäure, Trifluormethylsulfonsäure, Trifluoressigsäure, Essigsäure und insbesondere anorganische Säuren wie HF, HCl, HBr, HI oder deren Mischungen. Pro mol zu spaltender Si-Cp-Bindung wird dabei mindestens 1 mol der einbasischen Säure eingesetzt.

Gegebenenfalls kann zur Erhöhung der Reaktionsgeschwindigkeit die Mischung auch erwärmt werden.

Die Temperatur richtet sich dabei nach dem für die Spaltung der Si-Cp benötigten Optimum und liegt je nach Reaktanden im allgemeinen bei 20 - 150°C.

Bei leichtflüchtigen Reagenzien $HX^1$ kann, zur Vermeidung des Austritts des Einsatzstoffes über die Gasphase, die Reaktion auch in einem geschlossenen Gefäß bei Drücken von 1 - 150 bar ($10^3$hPa- 1,5mal $10^5$hPa) gefahren werden.

Bei Metallocenen, die aufgrund ihrer Substitution am Cp-Liganden in stereoisomeren Formen [racemat (rac) und meso-Verbindungen (meso)] vorliegen können, sind sowohl Gemische an rac:meso-Verbindung als auch das jeweils reine stereoisomere Metallocen einsetzbar, da die Spaltung der Si-Cp-Bindung jeweils zu demselben Produkt führt, unabhängig vom eingesetzen Stereoisomer.

Dies ist insbesondere für die Metallocene mit von Bedeutung, in denen Cp ein Indenyl- oder Tetrahydroindenyl-Rest ist, da bei diesen Liganden - unabhängig vom weiteren Substitutionsmuster - meso- und rac-Form existieren.

<u>Beispiele</u>

Alle Versuche wurden unter Ausschluß von Sauerstoff und Feuchtigkeit unter Inertgas durchgeführt.

Beispiel 1

Darstellung von [1-(Chlordimethylsilyl)-tetrahydroindenyl][tetrahydroindenyl]zirkon-dichlorid:

Es wurden 2 g (4,4 mmol) reines rac-Dimethylsilyl-bis(tetrahydroindenyl)$ZrCl_2$ in 50 ml Chloroform gelöst.

In diese Mischung wurden bei Raumtemperatur 98 ml gasförmiger, trockener Chlorwasserstoff (4,4 mmol) eingeleitet und gelöst.

Die Reaktionsmischung wurde bei Raumtemperatur gerührt und die Umsetzung wurde mittels $^1$H-NMR-Spektroskopie verfolgt.

Nach vollständigem Umsatz wurde das Lösungsmittel komplett abgezogen und der Rückstand aus Hexan umkristallisiert.

Es konnten 1,36 g (63 % d. Th.) an reinem Produkt isoliert werden.
$^1$H-NMR ($CDCl_3$):
6,46 (d, 1 H, H-Cp); 6,34 (t, 1 H, H-Cp); 5,9 (d, 1 H, H-Cp); 5,81 (t, 1 H, H-Cp); 5,72 (t, 1 H, H-Cp); 3,0 - 2,5 (m, 4 H, H-$C_6$-Ring); 1,95 - 1,55 (m, 4 H, H-$C_6$-Ring); 0,65 ppm (s, 3 H, $H_3$C-Si); 0,62 ppm (s, 3 H, $H_3$C-Si)

Zr: (ber.: 18,5) gef.: 18,3
Cl: (ber.: 21,6) gef.: 21,3
Si: (ber.: 5,7) gef.: 5,9

Beispiel 2

Es wurde Beispiel 1 wiederholt; anstelle von gasförmigem Chlorwasserstoff wurden 4,4 ml einer einmolaren Lösung an trockenem Chlorwasserstoff in Diethylether (4,4 mmol) eingesetzt.

Nach Aufarbeitung wurden 1,45 g Produkt (67 % d. Theorie) isoliert [$^1$H-NMR identisch mit dem in Beispiel 1].

Beispiel 3

Es wurde 1 g (2,2 mmol) einer 1 : 1 Mischung von rac:meso-$Me_2$Si(tetrahydroindenyl)$_2$$ZrCl_2$ in 100 ml Methylenchlorid gelöst und bei Raumtemperatur mit 2,2 ml einer einmolaren Lösung an trockenem Chlorwasserstoff in Diethylether (2,2 mmol) versetzt.

Die Reaktion wurde wieder mittels $^1$H-NMR verfolgt.

Es wurde wiederum als Reaktionsprodukt die Bildung von [(1-(Chlordimethylsilyl)-tetrahydroindenyl)(tetrahydroindenyl)]$ZrCl_2$ beobachtet.

Es konnten 0,77 g (71 % d. Th.) Produkt isoliert werden [1-H-NMR identisch mit dem in Beispiel 1].

Beispiel 4:

Es wurde Beispiel 2 wiederholt. Anstelle von Me2Si(tetrahydroindenyl)$_2$$ZrCl_2$ wurde $Me_2$Si(tetrahydroindenyl)$_2$$HfCl_2$ eingesetzt.

Es konnten 1,45 g (68 % d. Th.) an [1-(Chlorodimethylsilyl)tetrahydroindenyl]-[tetrahydroindenyl]$HfCl_2$ isoliert werden.
$^1$H-NMR ($CDCl_3$):
6,38 (d, 1 H, H-Cp); 6,24 (t, 1 H, H-Cp); 5,8 (d, 1 H, H-Cp); 5,71 (t, 1 H, H-Cp); 5,64 (t, 1 H, H-Cp); 3,1 - 2,5 (m, 4 H, H-$C_6$-Ring); 2,0 - 1,45 (m, 4 H, H-$C_6$-Ring); 0,64 ppm (s, 3 H, $H_3$C-Si); 0,61 ppm (s, 3 H, $H_3$C-Si)

Beispiel 5:

In einem 2 1-Druckgefäß wurden 5 g $Me_2$Si(tetrahydroindenyl)$_2$$ZrCl_2$, 250 ml Chloroform und 30 ml einmolare HCl in Diethylether bei 100 °C 6 h gerührt. Die Untersuchung einer Probe mittels $^1$H-NMR zeigte danach den vollständigen Umsatz des Einsatzstoffes an.

Nach Abziehen des Lösungsmittels und Umkristallisation konnten 3,2 g (59 % d. Th.) an reinem [1-(Chlorodimethylsilyl)-tetrahydroindenyl][tetrahydroindenyl]$ZrCl_2$ isoliert werden.

**Patentansprüche**

1. Verfahren zur Herstellung von unsymmetrisch substituierten Verbindungen der allgemeinen Formel (1)

$$[R^1R^2X^1Si((R^3)_aCp)]\ ((R^4)_aCp)M(X^2)_n \qquad (1)$$

worin

| | |
|---|---|
| $R^1$, $R^2$ = | unabhängig voneinander Alkyl-, Aryl-Reste |
| $X^1$ = | F, Cl, Br, I, p-Tolyl$SO_3$-, $F_3CSO_3$-, $F_3CCO_2$-, $H_3CCO_2$-, |
| $R^3$, $R^4$ = | gleich oder verschieden Alkyl-, Alkylether- oder Aryl-, Arylethergruppen mit $0 \leq a \leq 4$ |
| Cp = | ein Cyclopentadienyl, Indenyl-, Tetrahydroindenyl- oder Fluorenyl-Rest |
| M = | ein Übergangsmetall der Gruppen 3 - 6 IUPAC Notation, insbesondere Ti, Zr, Hf |
| $X^2$ = | F, Cl, Br, I |
| n = | die Oxidationszahl des Übergangsmetalls, vermindert um 2, |

sind,
dadurch gekennzeichnet, daß Verbindungen der allgemeinen Formel (2),

$$R^1R^2Si(Cp(R^3)_a)(Cp(R^4)_a)M(X^2)_n \qquad (2)$$

wobei $R^1$, $R^2$, Cp, $R^3$, $R^4$, a, M, $X^2$ und n die oben angeführten Bedeutungen haben, in einem inerten Lösungsmittel mit anorganischen oder organischen Säuren $HX^1$, wobei pro Mol zu spaltender Si-Cp-Bindung min 1 mol der einbasischen Säure eingesetzt wird, bei gegebenenfalls erhöhter Temperatur, bei gegebenenfalls erhöhtem Druck, gemäß allgemeiner Gleichung II

$$R^1R^2Si(Cp(R^3)_a)\ (Cp(R^4)_a)MX^2{}_n + HX^1 \rightarrow [R^1R^2X^1Si((R^3{}_a)Cp)]\ ((R^4)_aCp)MX^2{}_n$$

umgesetzt werden.

2. Verfahren gemäß Anspruch 1, dadurch gekennzeichnet, daß die Verbindungen der Formel (2) bei 20 - 100 °C unter Mitverwendung halogenider Kohlenwasserstoffe mit Halogenwasserstoffsäuren umgesetzt werden.

3. Verfahren gemäß Anspruch 1, dadurch gekennzeichnet, daß die Verbindungen der Formel (2) in Form ihrer rac: meso-Verbindungen eingesetzt werden.

## Claims

1. Process for the preparation of asymmetrically substituted compounds of the general formula (1)

$$[R^1R^2X^1Si((R^3)_aCp)]((R^4)_aCp)M(X^2)_n \qquad (1)$$

wherein

| | |
|---|---|
| $R^1$, $R^2$ | each independently of the other are alkyl or aryl radicals, |
| $X^1$ | is F, Cl, Br, I, p-tolyl$SO_3$-, $F_3CSO_3$-, $F_3CCO_2$- or $H_3CCO_2$-, |
| $R^3$, $R^4$ | which may be the same or different are alkyl or alkyl ether groups or aryl or aryl ether groups with $0 \leq a \leq 4$, |
| Cp | is a cyclopentadienyl, indenyl, tetrahydroindenyl or fluorenyl radical, |
| M | is a transition metal from groups 3 - 6 IUPAC notation, especially Ti, Zr or Hf, |
| $X^2$ | is F, Cl, Brorl, I, |
| n | is the oxidation number of the transition metal, minus 2, |

characterised in that compounds of the general formula (2)

$$R^1R^2Si(Cp(R^3)_a)(Cp(R^4)_aM(X^2)_n \qquad (2)$$

wherein $R^1$, $R^2$, Cp, $R^3$, $R^4$, a, M, $X^2$ and n are as defined above, are reacted in an inert solvent with inorganic or organic acids $HX^1$, with at least 1 mol of the monobasic acid being used per mol of Si-Cp bond to be cleaved, optionally at elevated temperature, optionally at elevated pressure, according to the general equation II

$$R^1R^2Si(Cp(R^3)_a)(Cp(R^4)_aMX^2{}_n + HX^1 \rightarrow [R^1R^2X^1Si((R^3{}_a)Cp)]((R^4)_aCp)MX^2{}_n$$

2. Process according to claim 1, characterised in that the compounds of formula (2) are reacted with hydrohalic acids at from 20 to 100°C using halogenated hydrocarbons in the reaction.

3. Process according to claim 1, characterised in that the compounds of formula (2) are used in the form of their rac: meso compounds.

## Revendications

1. Procédé de préparation de composés substitués de manière asymétrique, de formule générale (1) :

$$[R^1R^2X^1Si((R^3)_aCp)]((R^4)_aCp)M(X^2)_n \quad (1)$$

dans laquelle :

| | |
|---|---|
| $R^1$, $R^2$ | sont, indépendamment l'un de l'autre, un résidu alkyle, aryle ; |
| $X^1$ | est F, Cl, Br, I, p-tolyl-$SO_3$-, $F_3CSO_3$-, $F_3CCO_2$-, $H_3CCO_2$- ; |
| $R^3$, $R^4$ | sont, indépendamment l'un de l'autre, des groupes alkyle, alkyléther ou aryle, aryléther avec 0 £ a £ 4 ; |
| Cp | est un résidu cyclopentadiényle, indényle, tétra-hydroindényle ou fluorényle ; |
| M | est un métal de transition des groupes 3 à 6 de la notation IUPAC, notamment Ti, Zr, Hf ; |
| $X^2$ | est F, Cl, Br, I ; |
| n | est le nombre d'oxydation du métal de transition moins 2 ; |

caractérisé en ce que l'on fait réagir des composés de formule générale (2) :

$$R^1R^2Si(Cp(R^3)_a)(Cp(R^4)_a)M(X^2)_n \quad (2)$$

dans laquelle $R^1$, $R^2$, Cp, $R^3$, $R^4$, a, M, $X^2$ et n ont les significations indiquées ci-dessus, dans un solvant inerte avec des acides inorganiques ou organiques $HX^1$, en utilisant au minimum 1 mol du monoacide par mole de liaison Si-Cp à dissocier, le cas échéant à une température élevée, le cas échéant à une pression élevée, suivant l'équation générale II :

$$R^1R^2Si(Cp(R^3)_a)(Cp(R^4)_a)MX^2{}_n + HX^1 \rightarrow [R^1R^2X^1Si((R^3{}_a)Cp)]((R^4)_aCp)MX^2{}_n$$

2. Procédé selon la revendication 1, caractérisé en ce que les composés de formule (2) sont mis à réagir avec des hydracides halogénés à une température de 20 à 100°C avec utilisation conjointe d'hydrocarbures halogénés.

3. Procédé selon la revendication 1, caractérisé en ce que les composés de formule (2) sont utilisés sous la forme de leurs composés rac:méso.